(19) **Europäisches Patentamt**

**European Patent Office**

**Office européen des brevets**

(11) **EP 1 528 794 B1**

(12) **EUROPEAN PATENT SPECIFICATION**

(45) Date of publication and mention
of the grant of the patent:
**15.03.2006 Bulletin 2006/11**

(51) Int Cl.:
*H04N 1/60* (2006.01)    *H04N 9/73* (2006.01)

(21) Application number: **04300550.3**

(22) Date of filing: **20.08.2004**

(54) **Method for color correction of digital image data**

Verfahren zur Farbkorrektur von digitalen Bilddaten

Procédé de correction de couleur d'images numériques

(84) Designated Contracting States:
**AT BE BG CH CY CZ DE DK EE ES FI FR GB GR
HU IE IT LI LU MC NL PL PT RO SE SI SK TR**

(30) Priority: **29.10.2003 EP 03300181**

(43) Date of publication of application:
**04.05.2005 Bulletin 2005/18**

(73) Proprietor: **Thomson Licensing
92100 Boulogne Billancourt (FR)**

(72) Inventor: **Anderle, Klaus
64289 Darmstadt (DE)**

(74) Representative: **Rossmanith, Manfred
Deutsche Thomson-Brandt GmbH
European Patent Operations
Karl-Wiechert-Allee 74
30625 Hannover (DE)**

(56) References cited:
**EP-A- 1 237 379**          **WO-A-00/26857**
**WO-A-00/54213**          **US-A1- 2002 180 361**

## Description

The invention relates to a method and also a device for the color correction of digital image data. In particular, the invention relates to a method and a device for the color correction of digital image data generated by spectral absorption of white light in color filters of a color film.

What is of crucial importance to the viewer of a film or television production, besides picture sharpness, is the subjective color impression. Therefore, in the course of producing the productions, it is endeavored to ensure that the colors, when reproduced at the cinema and/or on a television screen, as far as possible appear in the way that the director intended. This aim, inter alia, is striven for with the postprocessing of film or image material. A prerequisite for an efficient postprocessing is that, by way of example, the color representation on the monitors of a colorist corresponds as exactly as possible to the image projected in a cinema, for example. Nowadays, the starting point for postprocessing is generally digitized image data generated by film scanners or electronic cameras. Added to these are computer-generated images which are present as digital image data from the outset.

Devices which strive for such correspondence between color representations with different representation means are already commercially available as software and hardware solutions. These devices are based on the considerations described below.

Colors arise in different ways on different reproduction media. From the earliest times it has been known from painting that from just three different pigments, namely yellow, blue-green and purple-red, all intermediate hues can be produced by mixing the primary colors mentioned. Primary colors are understood to be those colors which cannot be mixed from other colors but from which all other colors can be mixed. In chromatics nowadays this type of color mixing is referred to as subtractive color mixing. The term subtractive color mixing is derived from the fact that a pigment layer absorbs certain spectral components of incident white light and reflects others, as a result of which the color impression arises for the viewer. Other types of color mixing were initially not known.

It was not until a long time later that Isaac Newton recognized that the spectral colors of the light, the so-called color stimuli, can also be mixed. With this type of color mixing the jargon uses the term additive mixing in contrast to subtractive color mixing explained above in the case of pigments. Additive color mixing is governed by relatively simple rules, known as Grassmann's laws, which also apply to self-luminous screens, such as, for example monitors based on cathode ray tubes.

A special case of subtractive color mixing is the combination or superposition of optical filters. The transmission of the filter combination is equal to the product of the respective transmissions of the individual filters, which is why the jargon also uses the term multiplicative color mixing in this case. This last-mentioned type of color mixing is also critical for color reproduction in the projection of color films which have three different color layers lying one above the other.

WO 00/26857 describes a color management system for converting computer graphics images to film images. The system involves the creation of a direct mapping of chromaticity and intensity data from the values used to generate images on a computer monitor to the values used to display the images on projected motion picture film.

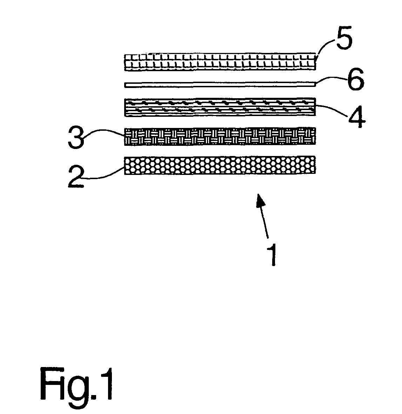

Figure 1 diagrammatically shows an example of the construction of a color film 1 in cross section. A layer carrier 2 carries three color layers 3, 4, 5 having the primary colors red, green and blue, the red-sensitive color layer 3 adjoining the layer carrier 2 and the blue-sensitive color layer 5 forming the topmost color layer. A yellow filter 6 lies between the blue-sensitive and green-sensitive color layers 5 and 4, respectively. For the purpose of better illustration, the individual layers are represented spaced apart in figure 1 but in reality they adjoin one another. The intermediate layer for preventing interdiffusion of the green-sensitive and red-sensitive colorants is not taken into account here and is not illustrated in figure 1 since it has no influence on the color behavior of the film which is essential to the present invention.

One important difference between additive and multiplicative color mixing is that Grassmann's laws cannot be applied to multiplicative color mixing. The reason for this is to be found in the fact that, by way of example, as the thickness of a cyan filter increases, there is a decrease not only in the transmission in the red spectral range but also to a considerable extent in the green spectral range. This fact and the resulting consequences are explained in detail further below. In known color correction systems, therefore, the absorption of test patterns ("test patches") is measured with the aid of densitometers and the absorption in the secondary densities is corrected by a transformation of the color coordinates.

It has been shown in practice, however, that despite these measures, the correspondence of colors is not always achieved during reproduction with different representation means.

For this reason, there continues to be a need for a device and a method for color correction which, in comparison with the prior art, achieve an improved correspondence between the colors during reproduction with different representation means.

This object is achieved by means of a method according to claim 1.

The method according to the invention serves for the color correction of digital image data generated by spectral absorption of white light in color filters of a first representation means. Firstly, the primary color values of the image data are detected, the primary color values being related to the first representation means.

The primary color values are then corrected in order to generate secondary color values, which are related to a second representation means and which take account of the absorption of light in secondary densities of the color filters. According to the invention, a plurality of absorption spectra are generated for different densities of at least one color filter. Building on this, the spectral profile of the absorption spectra of the color filters influences the correction of the primary color values for generating the secondary color values. Intermediate spectra are calculated from the plurality of absorption spectra for different densities of the color filter.

One advantage of the method is that this achieves a better correspondence of the color reproduction between the first and second representation means.

In a development of the invention a plurality of absorption spectra are generated for all the color filters. In this case, intermediate spectra may be calculated for all the color filters. As a result, more data are available for the correction of the color values, which may, in principle, have a favorable effect on the correspondence of the color representations that is striven for.

Finally, provision may be made for convolving the spectra of the color filters with the spectral perception curve of a standard observer in order to generate the secondary color values. In this way, it is possible to take account of the physiological perception of colors by the human eye.

The drawing illustrates facts which serve to provide a better understanding of the invention. In the figures:

Figure 1 diagrammatically shows the structure of a color film in cross section,
Figure 2 shows the construction of a colorist's workstation in greatly simplified form,
Figure 3 shows the spectral density of the blue, green and red color layers of a color film,
Figure 4 shows a flowchart of the method according to the invention and
Figure 5 shows color coordinates as a function of code values.

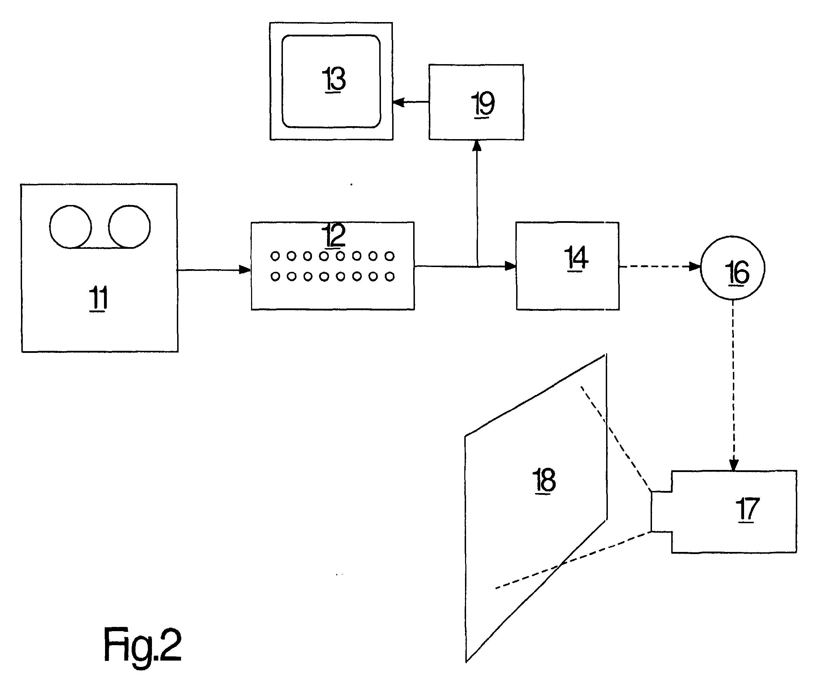

Figure 2 illustrates a colorist's workstation in greatly simplified form. In the course of film production, a first copy is made from the film material originally exposed by the camera. The copy is used to produce further prints which form the starting point for the postprocessing of the film. In figure 2, such a print is inserted in a film scanner 11. During the scanning of the print, the photographic image information is converted into digital image data and fed to a device 12 for color correction, which is usually operated by a colorist. During the correction of the film material, the colorist views the image to be processed on a monitor 13. The color representation on the monitor 13 is determined by color values at the output of the color correction device. The color values at the output of the color correction device 12 are also forwarded as control commands or "Code Values" to a film exposer 14, which exposes the data onto an internegative film. The content of the internegative film is then transferred to a positive film by means of a contact copy. The positive film is symbolized by a film reel 16 in figure 2. In order to inspect the result of the exposed film, the latter is projected onto a projection screen 18 by a film projector 17. Ideally, the color representation of an image projected onto the projection screen 18 corresponds to the color representation of the same image on the monitor 13. For approximation to this ideal case, a device 19 for adjusting the color coordinates is connected between the color correction device 12 and the monitor 13. The adjustment device 19 converts the "Code Values" sent to the film exposer 14 into color coordinates for the monitor 13. The conversion has the aim of obtaining as far as possible identical color representations on the monitor 13 and the projection screen 18, respectively. The conversion method and the conversion device 19 are described in greater detail below.

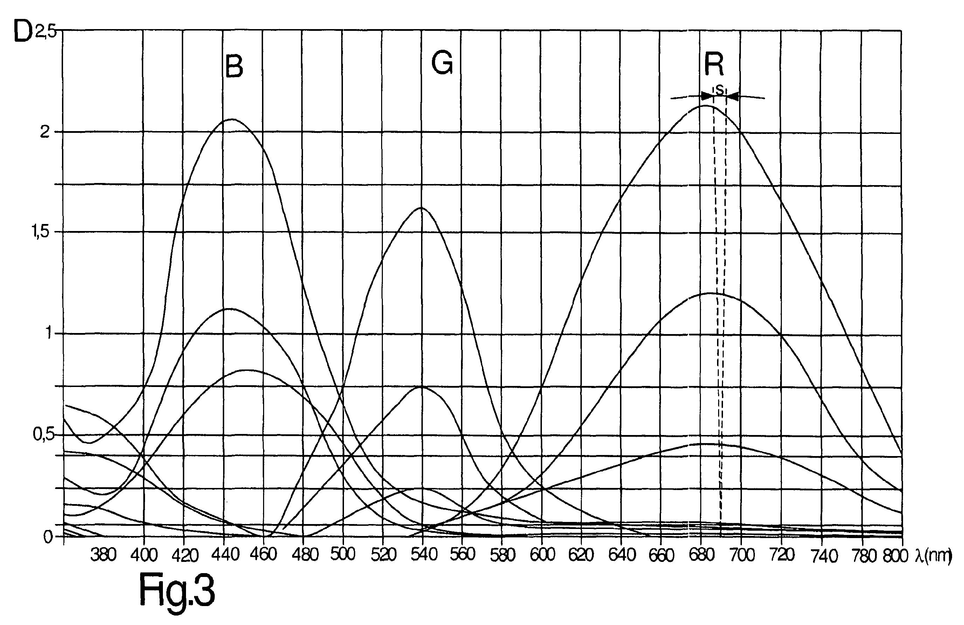

Figure 3 illustrates spectral curves of in each case three color filters of different density for the colors red, green and blue. The density D is plotted on the ordinate and the wavelengths in nanometers (nm) are plotted on the abscissa. The density D of a filter is derived from the transmission T thereof in accordance with the following formula:

$$D = -\log (T)$$

This means that at density zero, the relevant filter is completely transparent, and that the transmission decreases as the density increases. Density curves for filters with different transmissions are plotted for each of the primary colors red, green and blue. It can clearly be seen that, for the density curves for the red filter, by way of example, appreciable secondary maxima occur in the blue spectral range around 400 nm, and lead to a considerable absorption for the color impression. The same applies to a lesser extent to the density curves of the green filters. The density curves for the blue filters fall sharply in the wavelength range of between 440 nm and 380 nm in order to rise again below 380 nm. Furthermore, the density curves of the blue filters, with increasing density, exhibit a more and more highly pronounced plateau in the green spectral range around 550 nanometers, the plateau projecting right into the red spectral range. The absorption of a primary color filter in spectral ranges other than the spectral range assigned to the respective primary color is referred to as the "secondary density" of the density curve and results in color shifts during the projection of color films for example in the case of multiplicative color mixing. These effects are known in principle and are corrected for example by means of a linear transformation of the color coordinates. In order to better understand the extent to which the invention goes beyond the known methods, it is necessary firstly to discuss the conventional correction method in more detail.

Different film materials differ inter alia in the absorption properties of the colorants, which makes it necessary to adjust the color correction device 12 shown in figure 2 to a specific film material. For this purpose, the film exposer 14 exposes with predetermined code values so-called "test patches" i.e. image windows with different colors and color densities. This film material is then copied and produces the actual film. The test patches are then measured by densitometers in order to determine the absorption of a colorant in specific wavelength windows. The measurement characteristic of the densitometers is determined in accordance with DIN 4512 - 3 or a corresponding international standard. From this, the absorption of the colorants results not only in the principle maxima but also in the secondary maxima. The values determined in this way form the basis for the subsequent transformation of the color values which define the representation on the colorist's monitor 13. The transformed color values are corrected color values which define the illumination commands of the film exposer 14 and thus determine the subsequent color representation on the projection screen 18. To put it another way, the color values or code values which control the film exposer 14 are "predistorted" in order to compensate for the "distorting" influence of the colorants of the film material used.

It has been shown in practice, however, that the correspondence between the color representation on the monitor 13 and the projection screen 18 that is striven for in this way still leaves something to be desired. The purpose of the invention is to improve said correspondence.

In order to realize this aim, the invention commences at determination of the correction values. From the more precise consideration of the spectral density curves of the color filters as shown in figure 3, it is possible to derive further properties of the colorants which lead to color shifts. However, these properties cannot be identified by means of the densitometer measurements used in practice. This is because conventional densitometers permit only an integral consideration of the absorption properties of the colorants. Upon more precise consideration of the spectral absorption curves, a shift in the primary maxima toward shorter wavelengths can be discerned for all primary colors as the density increases. This shift S is represented using the example of the primary maximum for red in figure 3. Furthermore, the form of the density curves also changes as a function of the densities. It is exactly in this way that it is thus possible to determine and correspondingly describe the spectral influences of the particular film treatments during the copying process and the development.

In the case of conventional densitometer measurements, these changes are registered only as a change in the absorption in the respective measurement window. For this reason, it is not possible with densitometer measurements to determine the actual absorption at a specific wavelength. However, this is exactly what is important for as precise a correspondence as possible between the color representation on different representation means.

The invention therefore proposes measuring the test patches of the film materials using a spectrometer over the entire wavelength range and interpolating intermediate spectra from the spectra thus obtained. From the totality of the spectra, it is possible to derive, for the three primary colors, tables which put a color value that determines the representation on the colorist's monitor 13 into a relationship with a code value of the film exposer 14. A three-dimensional table is produced overall in this way.

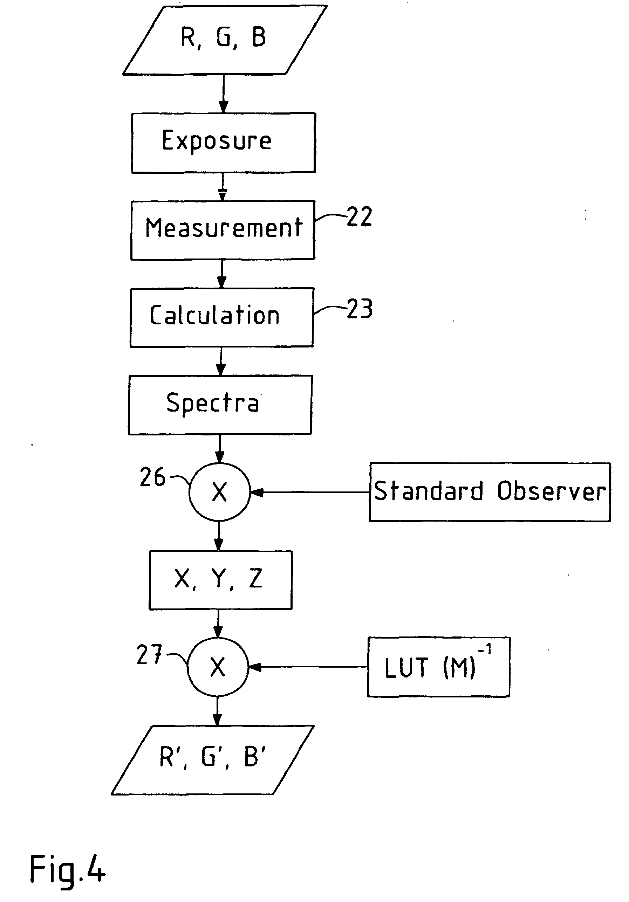

The method according to the invention is described in greater detail below with reference to figure 4. The starting point is formed by RGB color values which are output from the color correction device 12 to the monitor 13, on the one hand, and to the film exposer 14, on the other hand. In order to obtain a standardized color reproduction on the monitor 13, a so-called look-up table for the monitor LUT (M) is stored in the adjustment device 19, said table taking account of the reproduction properties of the monitor.

In accordance with the flowchart in figure 4, the film is exposed in the film exposer in accordance with these RGB values. Said film is then copied onto the material to be projected. The color patterns or patches generated in this way are measured spectrally in a step 22. In addition to these measured spectra, further intermediate spectra are calculated in a step 23. The totality of the spectra generated in this way are convolved with the perception curves of a standard observer in a step 26 in order to generate color coordinates X, Y, Z corresponding to the RGB values. The color coordinates X, Y, Z are finally linked with an "inverted" look-up table of the monitor LUT(M)$^{-1}$ in a step 27. This produces new color values R', G', B'. The influence of the film material on the color reproduction can be derived from the differences between the color values R, G, B and R', G', B'. Further look-up tables are therefore generated from said differences and are stored in the adjustment device 19 and kept ready for application to the color values RGB. What is achieved in this way is that the color representation on the monitor 13 corresponds very well to the color representation on the projection screen 18.

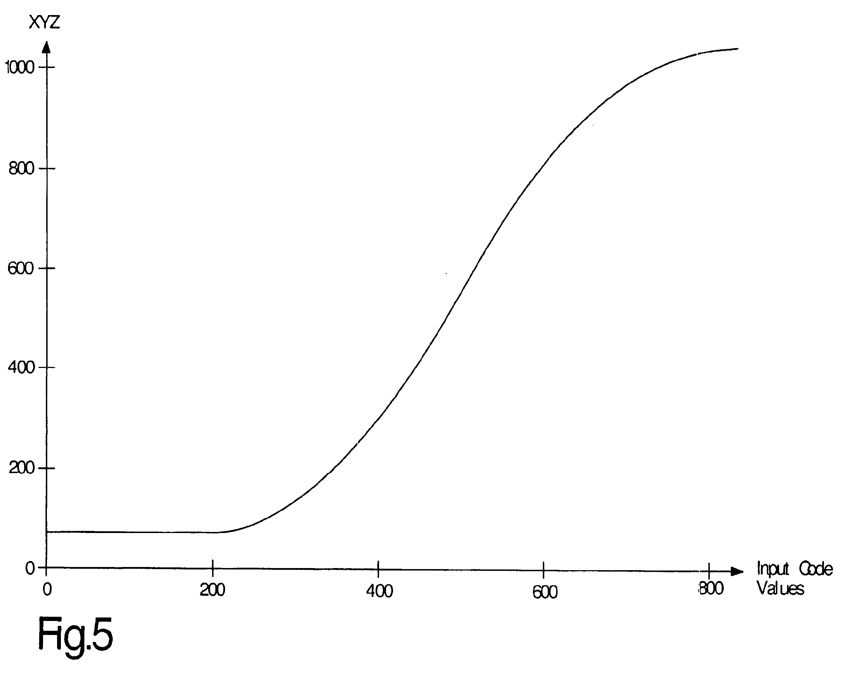

Figure 5 shows the profile of one of the color coordinates X, Y, X as a function of the code values of the film exposer. The color coordinates are measured from the transmission of grey patches on the film material. The result permits a statement about the density distribution as a function of the code values, which is likewise taken into account in the calculation of the corrected color values R', G', B'.

## Claims

1. A method for the color correction of digital image data to obtain corrected digital image data for display on a second representation means, said digital image data being used for display by spectral absorption of white light in color filters using a first representation means, the method comprising the following steps:

   (a) detection of the primary color values of the image data, the primary color values (R, G, B) being related to the first representation means,
   (b) correction of the primary color values in order to generate secondary color values (R', G', B'), which are related to a second representation means and which take account of the absorption of light in secondary densities of the color filters, **wherein**
   (c) a plurality of absorption spectra are generated for different densities of at least one color filter,
   (d) the spectral profile of the absorption spectra of the color filters influences the correction of the primary color values for generating the secondary color values, and
   (e) intermediate spectra are calculated from the plurality of absorption spectra for different densities of the color filter.

2. The method as claimed in claim 1, **wherein** a plurality of absorption spectra are generated for all the color filters.

3. The method as claimed in claim 2, **wherein** intermediate spectra are calculated for all the color filters.

4. The method as claimed in claim 3, **wherein** the spectra of the color filters are convolved with the spectral perception curve of a standard observer in order to generate the secondary color values.

5. The method as claimed in claim 3, **wherein** the transmission of neutral filters of different density of the first representation means is measured in order to determine the density distribution of different colorants in the first representation means.

## Patentansprüche

1. Verfahren zur Farbkorrektur von digitalen Bilddaten, die durch spektrale Absorption von weißem Licht in Farbfiltern eines ersten Darstellungsmittels erzeugt werden, wobei das Verfahren die folgenden Schritte umfasst:

   (a) Erfassen der primären Farbwerte der Bilddaten, wobei die primären Farbwerte (R, G, B) auf das erste Darstellungsmittel bezogen sind,
   (b) Korrektur der primären Farbwerte, um sekundäre Farbwerte (R', G', B') zu erzeugen, welche auf ein zweites Darstellungsmittel bezogen sind und welche die Absorption von Licht in Nebendichten der Farbfilter berücksichtigen, **wobei**
   (c) mehrere Absorptionsspektren für unterschiedliche Dichten wenigstens eines Farbfilters erzeugt werden,
   (d) der spektrale Verlauf der Absorptionsspektren der Farbfilter in die Korrektur der primären Farbwerte zur Erzeugung der sekundären Farbwerte einfließt, und
   (e) aus den mehreren Absorptionsspektren für unterschiedliche Dichten des Farbfilters Zwischenspektren berechnet werden.

2. Verfahren nach Anspruch 1, **wobei** für alle Farbfilter mehrere Absorptionsspektren erzeugt werden.

3. Verfahren nach Anspruch 2, **wobei** für alle Farbfilter Zwischenspektren berechnet werden.

4. Verfahren nach Anspruch 3, **wobei** die Spektren der Farbfilter mit der spektralen Wahrnehmungskurve eines Normbeobachters gefaltet werden, um die sekundären Farbwerte zu erzeugen.

5. Verfahren nach Anspruch 3, **wobei** die Transmission von Graufiltern unterschiedlicher Dichte des ersten Darstellungsmittels ausgemessen wird, um die Dichteverteilung unterschiedlicher Farbstoffe in dem ersten Darstellungsmittel zu bestimmen.

## Revendications

1. Un procédé de correction de couleur d'images numériques pour obtenir des images numériques corrigées pour l'affichage sur un second moyen de représentation, lesdites images numériques étant utilisées pour l'affichage par absorption spectrale de lumière blanche dans des filtres colorés à l'aide d'un premier moyen de représentation, le procédé comprenant les étapes suivantes :

   (a) détection des valeurs de couleur primaire des données images, les valeurs de couleur primaire (R, G, B) se rapportant au premier moyen de représentation,
   (b) correction des valeurs de couleur primaire afin de générer des valeurs de couleur secondaire (R', G', B') qui se rapportent à un second moyen de représentation, et qui prennent en compte l'absorption de lumière dans des densités secondaires des filtres colorés,

**dans lequel**

(c) une pluralité de spectres d'absorption sont générés pour différentes densités d'au moins un filtre coloré,

(d) le profil spectral des spectres d'absorption des filtres colorés influence la correction des valeurs de couleur primaire pour générer les valeurs de couleur secondaire, et

(e) des spectres intermédiaires sont calculés à partir de la pluralité de spectres d'absorption pour différentes densités du filtre coloré.

2. Le procédé tel que revendiqué dans la revendication 1, **dans lequel** une pluralité de spectres d'absorption sont générés pour tous les filtres colorés.

3. Le procédé tel que revendiqué dans la revendication 2, **dans lequel** des spectres intermédiaires sont calculés pour tous les filtres colorés.

4. Le procédé tel que revendiqué dans la revendication 3, **dans lequel** les spectres des filtres colorés sont enroulés avec la courbe de perception spectrale d'un observateur standard afin de générer les valeurs de couleur secondaire.

5. Le procédé tel que revendiqué dans la revendication 3, **dans lequel** la transmission de filtres neutres de densité différente du premier moyen de représentation est mesurée afin de déterminer la répartition de densité de dififérents colorants dans le premier moyen de représentation.

Fig.1

Fig.2

Fig.3

EP 1 528 794 B1

```
        ┌─────────────────┐
       /     R, G, B     /
      └─────────────────┘
                │
                ▼
        ┌─────────────────┐
        │    Exposure     │
        └─────────────────┘
                │
                ▼
        ┌─────────────────┐   22
        │   Measurement   │──
        └─────────────────┘
                │
                ▼
        ┌─────────────────┐   23
        │   Calculation   │──
        └─────────────────┘
                │
                ▼
        ┌─────────────────┐
        │     Spectra     │
        └─────────────────┘
                │
                ▼
    26 ─  (  X  )  ◄──────  ┌─────────────────────┐
                            │  Standard Observer  │
                            └─────────────────────┘
                │
                ▼
        ┌─────────────────┐
        │     X, Y, Z     │
        └─────────────────┘
                │
                ▼
    27 ─  (  X  )  ◄──────  ┌─────────────────┐
                            │   LUT (M)⁻¹     │
                            └─────────────────┘
                │
                ▼
       ┌─────────────────┐
      /    R', G', B'    /
     └─────────────────┘
```

Fig.4

Fig.5